Europäisches Patentamt

European Patent Office

Office européen des brevets

(11) Publication number: **0 480 056 A1**

## EUROPEAN PATENT APPLICATION
### published in accordance with Art. 158(3) EPC

(21) Application number: 91906857.7

(22) Date of filing: **02.04.91**

(86) International application number:
**PCT/JP91/00441**

(87) International publication number:
**WO 91/15860 (17.10.91 91/24)**

(51) Int. Cl.5: **H01B 1/24**, H01B 9/02

(30) Priority: **03.04.90 JP 89396/90**

(43) Date of publication of application:
**15.04.92 Bulletin 92/16**

(84) Designated Contracting States:
**DE FR GB IT SE**

(71) Applicant: **THE FURUKAWA ELECTRIC CO., LTD.**
**6-1, Marunouchi 2-chome Chiyoda-ku Tokyo 100(JP)**

(72) Inventor: **SUZUKI, Hiroaki, 4-4-15, Sugano Ichikawa-shi Chiba 272(JP)**
Inventor: **UESUGI, Kenji, 3-30-10, Misora Yotsukaido-shi Chiba 284(JP)**

(74) Representative: **Holmes, Michael John Frank B. Dehn & Co. Imperial House 15-19 Kingsway London WC2B 6UZ(GB)**

(54) SEMICONDUCTIVE RESIN COMPOSITION AND RUBBER/PLASTIC INSULATED POWER CABLE PRODUCED BY USING THE SAME.

(57) A semiconductive resin composition essentially comprising 100 parts by weight of a base resin which comprises an olefinic polymer having a crystalline melting point of lower than 86°C or a mixture of said olefinic polymer with another olefinic polymer having a crystalline melting point of 100 °C or above, does not have any crystalline melting point in the temperature range from 86 °C to lower than 100 °C and has a crystallinity of 20 to 35 %, and 40 to 80 parts by weight of conductive carbon black comprising acetylene black and/or furnace black. A rubber/plastic insulated power cable wherein the internal and/or external semiconductive layer is formed from the above composition or the cross-linked derivative thereof. Since the crystalline part of this composition does not melt at the service temperature of the cable, the composition serves to control the lowering and destabilization of conductivity, to inhibit the rise of a tan $\delta$ value, and to prevent the performance of the power cable from being deteriorated.

EP 0 480 056 A1

# FIG. 2

## TECHNICAL FIELD

The present invention relates to a semiconductive resin composition and a rubber or plastic insulated power cable using the same, and more particularly, to a semiconductive resin composition useful as a material of an inner semiconductive layer and/or an outer semiconductive layer of a rubber or plastic insulated power cable for high-voltage use, and the rubber or plastic insulated power cable using the same.

## BACKGROUND ART

A rubber or plastic insulated power cable (hereinafter referred to simply as power cable) generally comprises a cable core which includes a conductor clad with an inner semiconductive layer and an insulation layer, or with an inner semiconductive layer, an insulation layer, and an outer semiconductive layer.

Usually, the aforesaid inner and outer semiconductive layers are made of a resin composition, which is based on an olefin resin compounded with a desired amount of conductive carbon black, or a crosslinked structure thereof. Disclosed in Published Unexamined Japanese Patent Applications Nos. 56-798065, 60-206855, and 1-246707, for example, are semiconductive resin compositions for cables which are obtained by compounding a mixture of ethylene- vinyl acetate copolymer and polyethylene, for use as a base resin, with carbon black. These compositions have been developed in order to prevent thermal deformation or to improve the properties for adhesion to insulator or extrudability. The crystalline melting point and degree of crystallization of the base resin, which are essential to the achievement of the object of the present invention described later, are mentioned in neither of those patent applications.

Disclosed in Published Unexamined Japanese Patent Application No. 55-111010, moreover, is a semiconductive resin composition in which a specific carbon black, such as KETJEN black, is blended in combination with acetylene black to ensure stable electrical conductivity. Since KETJEN black has low dispersibility and contains a lot of contaminants, however, extruded products are poor in surface smoothness, and are inclined to the frequency of electrical trees.

Disclosed in Published Unexamined Japanese Patent Application No. 59-56441, furthermore, is a semiconductive resin composition which uses, as a base resin, a mixture of an ethylene-based polymer with a crystalline melting point of 90 to 120°C and ethylene-α -olefin-polyene copolymer rubber. If rubber is used in the base resin, however, pelletizing of the resin, and therefore, its handling, are difficult, so that contaminants are liable to be mixed. Since the melt viscosity of the resin is so high that the moldability is poor, the surface smoothness of extruded products is lowered.

In the semiconductive resin composition, the compounded conductive carbon black exists forming a network in the olefin resin as a matrix, thereby giving desired electrical conductivity to the composition.

The aforesaid network of the conductive carbon black is indicative of a state in which the interparticle distance between adjacent carbon black particles is shortened so that the carbon black particles are distributed in a close stereostructure as a whole in the olefin resin. With this network formed in this manner, an electrical conduction is caused by a tunnel effect, that is, hopping of electric charge, and electrical conductivity is generated in the resultant resin composition.

The aforesaid olefin resin composition, which constitutes the inner and outer semiconductive layers of the power cable, is known to be constructed so that the network of the conductive carbon black is destroyed by thermal expansion, which accompanies the softening or melting of the resin composition at a temperature of about 90°C, that is, the working temperature of the power cable, and therefore, the rising rate of volume resistivity increases.

If the volume resistivity of the semiconductive layers increases during the use of the power cable, the electrical conductivity of the inner and outer semiconductive layers becomes unstable, and tan$\delta$ increases, so that the loss of power transmission increases, thereby entailing lowering of the performance of the power cable.

The object of the present invention is to provide a semiconductive resin composition, which can solve the problems described above, and is adapted for use as a material of inner and outer semiconductive layers, whose volume resistivity increases at a low rate even with use of the working temperature of a power cable, and whose electrical conductivity is therefore stable, and a rubber or plastic insulated power cable using the same.

## DISCLOSURE OF THE INVENTION

According to the present invention, there is provided a semiconductive resin composition consisting essentially of 100 parts by weight of a base resin, which is composed of an olefin-based polymer with a crystalline melting point lower than 86°C, or an intimate mixture of the olefin-based polymer with a crystalline melting point lower than 86°C and an olefin-based polymer with a crystalline melting point of 100°C or more, whose crystalline melting point is substantially off the range from 86°C to a temperature lower than 100°C, and whose degree of crystallization ranges from 20 to 35%, and 40 to 80 parts by weight of a conductive carbon black composed of acetylene black or furnace black, or a mixture thereof. Also provided is a rubber or plastic insulated power cable comprising a conductor having an inner semiconductive layer and an insulation layer, and if necessary, an outer semiconductive layer, formed thereon in succession, in which the rubber or plastic insulated power cable is characterized in that the inner semiconductive layer and/or the outer semiconductive layer is made of the aforesaid semiconductive resin composition or a crosslinked structure thereof.

The semiconductive resin composition of the present invention consists essentially of the aforesaid base resin and conductive carbon black.

First, it is necessary that the aforesaid base resin be made of one olefin-based polymer or a mixture of two or more olefin-based polymers, do not substantially have the crystalline melting point thereof within the range from 86°C to a temperature lower than 100°C, and have the degree of crystallization thereof ranging from 20 to 35%.

The crystalline melting point and the degree of crystallization used in the present invention are values defined as follows, both based on the differential scanning calorimetry (hereinafter referred to as DSC process).

Now let it be supposed that a differential calorimetric curve is drawn from a variation in a sample of measurement as being heated at the rate of temperature rise of 10°C/min, and a temperature for obtaining the endothermic peak of the curve, which comes about as a crystalline ingredient in the sample melts, is regarded as the crystalline melting point (°C).

Further, the endotherm of the aforesaid curve is integrated to calculate the quantity of heat required for the fusion of the crystal in the sample, latent heat A (joule/g) of fusion of the crystal in the sample is obtained due to the integrated quantity of heat, and a value obtained by substituting the value A into an equation, $B = 0.344 \times A$, is used as the degree of crystallization (%).

If the degree of crystallization of the base resin is less than 20%, the network of conductive carbon black (mentioned later) cannot be fully formed in a target resin composition when the resin composition is prepared by compounding the conductive carbon black with the base resin. Thus, the resin composition obtained cannot enjoy satisfactory electrical conductivity. If the degree of crystallization exceeds 35%, on the other hand, the extrudability of the prepared resin composition lowers, so that it is more difficult to form a semiconductive layer by extruding the resin composition onto the conductor, for example.

Preferably, the degree of crystallization of the base resin ranges from 25 to 30%.

The base resin used should not substantially have its crystalline melting point within the range from 86°C to a temperature lower than 100°C, for the following reason. If the crystalline melting point of the base resin is lower than 86°C, the volume resistivity increases in the vicinity of the crystalline melting point due to thermal expansion, which is attributable to the fusion of the crystal. In the vicinity of 90°C as the working temperature of the power cable, however, most of the crystal is fused, so that the mobility of the carbon increases, thereby allowing the carbon network to reform. Accordingly, the volume resistivity lowers, so that the electrical conductivity is stabilized, and the cable performance can be restrained from lowering.

Preferably used, moreover, is the mixture of the olefin-based polymer with a crystalline melting point of lower than 86°C and the olefin-based polymer with a crystalline melting point of 100°C or more. This is because the crystalline melting point of this mixture is higher than the working temperature of the power cable, so that there is no substantial increase in the volume resistivity due to thermal expansion which is attributable to the fusion of the crystal in the vicinity of the working temperature of the cable, and moreover, the olefin-based polymer with a crystalline melting point of 100°C or more contributes to the adjustment of the degree of crystallization of the whole base resin.

Polymers with a crystalline melting point of lower than 86°C include ethylene-vinyl acetate copolymer with a density of 0.940 g/ml or more, ethylene-ethyl acrylate copolymer with an ethyl acrylate content of 17% or more by weight, ethylene- methyl acrylate copolymer with a methyl acrylate content of 25% or more by weight, ethylene-methacrylic acid copolymer with a density of 0.940 g/ml or more, ethylene-methyl methacrylate copolymer with a density of 0.940 g/ml or more, and ethylene-vinyl acetate copolymer with a density preferably ranging from 0.940 to 0.945 g/ml, for example. These materials may be used singly or in a combination of two or more.

Polymers with a crystalline melting point of 100°C or more include, for example, low-density polyethylene, very-low-density polyethylene or linear low-density polyethylene having a density of 0.940 g/ml or less, and further high- pressure-processed low-density polyethylene preferably having a density of 0.92 g/ml or less, and very-low- density polyethylene with a density of 0.90 g/ml or less. These materials may be used singly or in a suitable combination of two or more.

The base resin may be the olefin-based polymer with a crystalline melting point lower than 86°C, or the mixture of the olefin-based polymer with a crystalline melting point lower than 86°C and the olefin-based polymer with a crystalline melting point of 100°C or more. Preferably, the mixture should be used because the adjustment of the degree of crystallization of the base resin is easier, and the resultant composition is well balanced in the moldability, ease of construction of the carbon black network, etc.

Preferably, in this case, 50 parts or less by weight of the aforesaid low-density polyethylene is mixed with 50 to 100 parts by weight of the aforesaid ethylene-vinyl acetate copolymer.

Also, the aforesaid base resin may be further compounded with ethylene-based polymers whose crystalline melting point is at least 86°C and lower than 100°C, as long as the loading of the polymers is restricted to 20 parts or less by weight to 100 parts by weight of the base resin. This is because, if the loading of these copolymers is less than 20 parts by weight, the peak crystalline melting point of the resultant base resin, as in a DSC chart, substantially does not present itself within the range from 86°C to lower than 100°C.

The semiconductive resin composition of the present invention is obtained by compounding conductive carbon black with the base resin described above.

The conductive carbon black used may be acetylene black or furnace black, or a mixture of acetylene black and furnace black.

The loading of the conductive carbon black is set between 40 and 80 parts by weight based on with 100 parts by weight of the base resin.

If the conductive carbon black is compounded with the base resin, the peak crystalline melting point of the resultant semiconductive resin composition, which appears in the DSC chart, somewhat shifts to the low- temperature side, depending on the loading of the carbon black.

If the loading is less than 40 parts by weight, the electrical conductivity of the resultant resin composition is too low. On the other hand, if the loading exceeds 80 parts by weight, the melt viscosity becomes so high that the moldability and the dispersibility of the carbon black considerably lower. In either case, therefore, the resin composition is not suited for use as a material of the semiconductive layer. Preferably, the loading ranges from 50 to 70 parts by weight based on 100 parts by weight of the base resin.

Although the above-described ingredients are essential to the resin composition of the present invention, various fillers, such as crosslinking agents, antioxidants, lubricants, etc., may be further added without interfering with the object of the present invention.

Available crosslinking agents include 1,3-bis(tert-butylperoxy-i-propyl) benzene, tert-butyl-α-cumyl peroxide, dicumyl peroxide, and 2,4-diphenyl-4-methyl-1-pentene, for example. Available antioxidants include 4,4'-bis(3-methyl-6-tert-butylphenol), bis[2-methyl-4-(3-n-alkylthiopropionyloxy)-5-tert- butylphenyl] sulfide, 2,5-di-tert-butyl hydroquinone, 2,6-di-tert-butyl-p-cresol, 2,2'-thiodiethylene-bis-[3-(3,5-di-tert-butyl-4-hydroxyphenyl) propionate], dilauryl thiodipropionate, and distearyl thiodipropionate, for example.

Further, available lubricants include zinc stearate, magnesium stearate, stearic acid, oxy- aliphatic acid, oleyl amide, erucyl amide, ethylene glycol monostearate, cetyl alcohol, stearyl alcohol, and silicon halide, for example.

The inner or outer semiconductive layer of the power cable of the present invention is composed of the aforesaid semiconductive resin composition or a crosslinked structure thereof.

These semiconductive layers are formed by extruding the aforesaid resin composition onto the outer peripheral surface of the conductor, and if necessary, subjecting the resultant structure to a crosslinking process thereafter. Alternatively, a tape made from the resin composition, wound around the conductor, and if necessary, subjected to the crosslinking process thereafter.

If it is subjected to the crosslinking process, the crystalline melting point of the aforesaid resin composition goes under 81°C, or becomes at least 95°C, and the degree of crystallization thereof ranges from 18 to 32%. The ultimate object of the present invention, which is to stabilize the performance of the power cable, can be fully achieved if the semiconductive layers incorporated in the cable have the aforesaid crystalline melting point and degree of crystallization.

## BRIEF DESCRIPTION OF THE DRAWINGS

Fig. 1 is a chart showing a differential calorimetric curve of a base resin according to Embodiment 4;
Fig. 2 is a sectional view showing a sectional configuration of a power cable; and

Fig. 3 is a graph showing the tan$\delta$ characteristic of the power cable.

**EMBODIMENTS**

Various resin compositions were prepared by kneading the ingredients shown in Table 1 in the tabulated ratios (parts by weight) by means of an open roll. These resin compositions were extrusion-molded into sheets at a set extrusion temperature of 130°C.

The respective volume resistivities of these individual sheets at temperatures of 20°C and 90°C were measured in accordance with ASTM D-991. Further, the respective base resins of the sheets were subjected to the DSC process at the rate of temperature rise of 10°C/min, and their crystalline melting point and degree of crystallization were calculated. The extrudability of the resin compositions at the time of extrusion molding was determined. The resin compositions were judged as conforming when they enjoyed a good extrusion appearance at a preset temperature of 120°C, and as defective when the extrusion appearance was poor. Table 1 collectively shows the results of this decision.

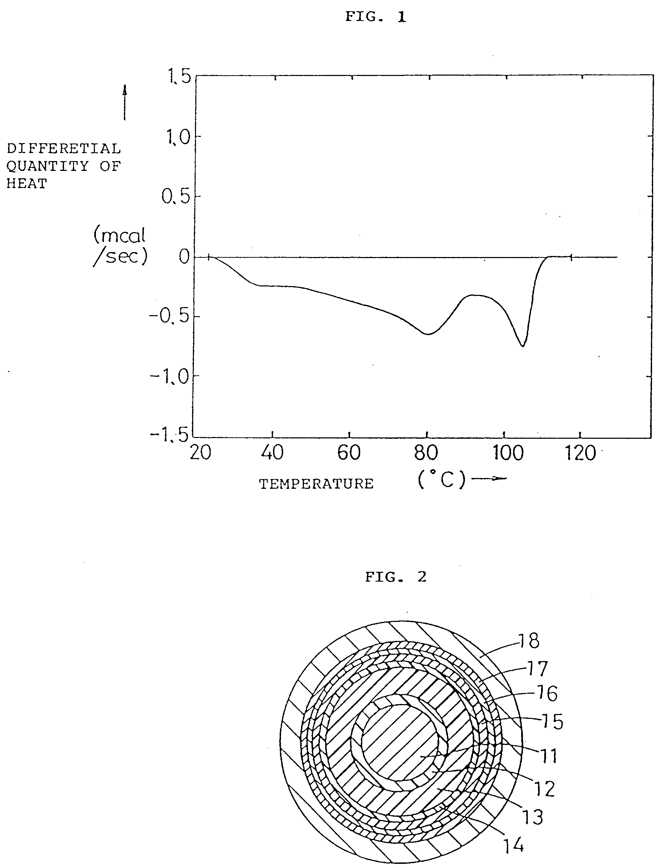

Fig. 1 shows a differential calorimetric curve of a base resin according to Embodiment 4.

Table 1

| | | Embodiment No. | | | | | | | Control No. | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Composition (parts by weight) | Ethylene-vinyl acetate copolymer *1 | 100 | 90 | 80 | 70 | 50 | 80 | 80 | 40 | – | – | – | 80 | – | 20 |
| | Ethylene-vinyl acetate copolymer *2 | – | – | – | – | – | – | – | – | 100 | – | – | – | – | – |
| | Low-density polyethylene *3 | – | 10 | 20 | 30 | 50 | – | – | 60 | – | – | 100 | 20 | – | – |
| | High-density polyethylene *4 | – | – | – | – | – | – | – | – | – | – | – | – | 100 | 80 |
| | Ethylene-ethyl acrylate copolymer *5 | – | – | – | – | – | – | – | – | – | 100 | – | – | – | – |
| | Very-low-density polyethylene *6 | – | – | – | – | – | 20 | – | – | – | – | – | – | – | – |
| | Linear low-density polyethylene *7 | – | – | – | – | – | – | 20 | – | – | – | – | – | – | – |
| | Acetylene black *8 | 60 | 60 | 60 | 60 | 55 | 65 | 60 | 60 | 60 | 60 | 60 | 60 | 55 | 60 |
| | Antioxidant *9 | 0.3 | 0.3 | 0.3 | 0.3 | 0.3 | 0.3 | 0.3 | 0.3 | 0.3 | 0.3 | 0.3 | 0.3 | 0.3 | 0.3 |
| Properties | Crystalline melting point (°C) | 80 | 80 | 80 | 80, 105 | 80, 105 | 80, 120 | 80, 124 | 80, 105 | 70 | 90 | 105 | 80, 130 | 130 | 88, 105 |
| | Degree of crystallization (%) | 23 | 24 | 26 | 29 | 35 | 24 | 25 | 38 | 13 | 27 | 48 | 41 | 60 | 28 |
| | Volume resistivity (Ω-cm) 25°C | $7 \times 10^2$ | $3 \times 10^2$ | $2 \times 10^2$ | $9 \times 10^1$ | $2 \times 10^1$ | $3 \times 10^1$ | $3 \times 10^1$ | $4 \times 10^1$ | $3 \times 10^4$ | $1 \times 10^3$ | $2 \times 10^1$ | $8 \times 10^1$ | $1 \times 10^1$ | $4 \times 10^2$ |
| | Volume resistivity (Ω-cm) 90°C | $1 \times 10^4$ | $7 \times 10^3$ | $5 \times 10^3$ | $3 \times 10^3$ | $5 \times 10^2$ | $6 \times 10^2$ | $9 \times 10^2$ | $3 \times 10^2$ | $2 \times 10^5$ | $6 \times 10^5$ | $2 \times 10^3$ | $6 \times 10^3$ | $1 \times 10^2$ | $2 \times 10^3$ |
| | Extrusion molding properties | Con-forming | Con-forming | Con-forming | Con-forming | Con-forming | Con-forming | Con-forming | Defective | Con-forming | Con-forming | Defective | Defective | Defective | Con-forming |

*1: Density = 0.94 g/ml, crystalline m.p. = 80°C
*2: Density = 0.95 g/ml, crystalline m.p. = 70°C
*3: Density = 0.92 g/ml, crystalline m.p. = 105°C
*4: Density = 0.95 g/ml, crystalline m.p. = 136°C
*5: Density = 0.93 g/ml, crystalline m.p. = 90°C
*6: Density = 0.91 g/ml, crystalline m.p. = 120°C
*7: Density = 0.92 g/ml, crystalline m.p. = 124°C
*8: Denka Black (trademark; produced by Denki Kagaku Kogyo Co., Ltd.)
*9: 4,4'-thiobis(6-tert-butyl-3-methylphenol)

Then, 0.5 part by weight of 1,3-bis(tert-butylperoxy-i-propyl) benzene (crosslinking agent) was compounded with 100 parts by weight of each of resin compositions of Embodiments 1, 3, 4 and 5 and Controls 2, 3 and 7, and inner and outer semiconductive layers were formed by a conventional method using the resultant compounds, whereby power cables having the sectional configuration shown in Fig. 2 were produced.

More specifically, the sectional area of a conductor 11 is 150 mm$^2$, an inner semiconductive layer 12 formed on the conductor is composed of a crosslinked structure of each of the aforesaid resin compositions with a thickness of 1 mm, an insulation layer 13 is formed of crosslinked low-density polyethylene with a thickness of 6 mm and a density of 0.920 g/ml, and an outer semiconductive layer 14 is composed of a crosslinked structure of each of the aforesaid resin compositions with a thickness of 1 mm. A semiconductive fabric tape 15, a metal shield 16, a hold tape 17, and a sheath layer 18 are successively formed on the outer semiconductive layer.

For the respective inner semiconductive layers of these power cables, formed of the crosslinked structures of the resin compositions obtained by compounding the aforesaid crosslinking agent with Embodiments 1, 3 and 4 and Controls 3 and 7, the crystalline melting point and degree of crystallization were obtained by the DSC process. Table 2 shows the results.

Table 2

|  | Corresponding Embodiment No. | | | Corresponding Control No. | |
|---|---|---|---|---|---|
|  | 1 | 3 | 4 | 3 | 7 |
| Crystalline melting point (°C) | 76 | 76, 96 | 76, 96 | 86 | 86, 96 |
| Degree of Crystallization (%) | 20 | 24 | 27 | 25 | 24 |

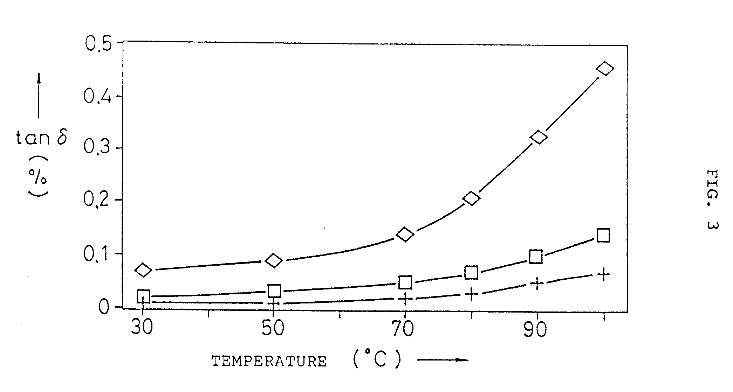

For the power cables whose inner and outer semiconductive layers are made of the crosslinked structures of the resin compositions obtained by compounding the aforesaid crosslinking agent with Embodiments 1 and 5 and Control 2, the tan$\delta$ characteristic was measured at 40 kV/mm. Fig. 3 shows the results. In this drawing, the squares, crosses, and diamonds represent the cases corresponding to Embodiment 1, Embodiment 5, and Control 2, respectively.

**INDUSTRIAL APPLICABILITY**

Since the crystalline melting point of the semiconductive resin composition according to the present invention is off the temperature region near the working temperature of the power cable, the electrical conductivity of the inner and outer semiconductive layers, made of this resin composition, remains be kept stable without lowering during the use of the power cable. Further, the extrudability is satisfactory. Since the degree of crystallization ranges from 20 to 35%, moreover, the network of the compounded conductive carbon black can be suitably constructed, and proper electrical conductivity can be developed.

In the power cable whose inner or outer semiconductive layer is formed of the semiconductive resin composition according to the present invention, therefore, the volume resistivity of these semiconductive layers is kept stable without increasing even during actual use, so that their tan$\delta$ never increases either. Thus, the power cable can serve to stabilize its performance. The power cable of the present invention is particularly useful as a high-voltage power cable.

**Claims**

1. A semiconductive resin composition consisting essentially of 100 parts by weight of a base resin, which is composed of an olefin-based polymer with a crystalline melting point lower than 86°C, or an intimate mixture of said olefin-based polymer with a crystalline melting point lower than 86°C and an olefin-based polymer with a crystalline melting point of 100°C or more, whose crystalline melting point is substantially off the range from 86°C to a temperature lower than 100°C, and whose degree of crystallization ranges from 20 to 35%, and 40 to 80 parts by weight of a conductive carbon black composed of acetylene black or furnace black, or a mixture thereof.

2. A semiconductive resin composition according to claim 1, wherein said olefin-based polymer with a crystalline melting point lower than 86°C is ethylene-vinyl acetate copolymer.

3. A semiconductive resin composition according to claim 1, wherein said olefin-based polymer with a crystalline melting point of 100°C or more is at least one material selected from a group of low-density polyethylene, very-low-density polyethylene, and linear low-density polyethylene.

8

4. A semiconductive resin composition according to claim 1, wherein said olefin-based polymer with a crystalline melting point lower than 86°C is ethylene-vinyl acetate copolymer, said olefin-based polymer with a crystalline melting point of 100°C or more is low-density polyethylene, and said intimate mixture contains 50 % by weight or more of said ethylene-vinyl acetate copolymer.

5. In a rubber or plastic insulated power cable comprising a conductor having an inner semiconductive layer and an insulation layer, and an possible outer semiconductive layer, formed thereon in succession, the rubber or plastic insulated power cable characterized in that said inner semiconductive layer and/or said outer semiconductive layer is made of a semiconductive resin composition or a crosslinked structure thereof, said semiconductive resin composition consisting essentially of 100 parts by weight of a base resin, which is composed of an olefin-based polymer with a crystalline melting point lower than 86°C, or an intimate mixture of said olefin-based polymer with a crystalline melting point lower than 86°C and an olefin-based polymer with a crystalline melting point of 100°C or more, whose crystalline melting point is substantially off the range from 86°C to a temperature lower than 100°C, and whose degree of crystallization ranges from 20 to 35%, and 40 to 80 parts by weight of a conductive carbon black composed of acetylene black or furnace black, or a mixture thereof.

6. A rubber or plastic insulated power cable according to claim 5, wherein said olefin-based polymer with a crystalline melting point lower than 86°C is ethylene-vinyl acetate copolymer.

7. A rubber or plastic insulated power cable according to claim 5, wherein said olefin-based polymer with a crystalline melting point of 100°C or more is at least one material selected from a group of low-density polyethylene, very-low- density polyethylene, and linear low-density polyethylene.

8. A rubber or plastic insulated power cable according to claim 5, wherein said olefin-based polymer with a crystalline melting point lower than 86°C is ethylene-vinyl acetate copolymer, said olefin- based polymer with a crystalline melting point of 100°C or more is low-density polyethylene, and said intimate mixture contains 50 % by weight or more of said ethylene-vinyl acetate copolymer.

9. A rubber or plastic insulated power cable according to claim 5, wherein said crosslinked structure does not substantially have the crystalline melting point thereof within the range from 81°C to a temperature lower than 95°C, and has the degree of crystallization thereof ranging from 18 to 32%.

FIG. 1

FIG. 2

FIG. 3

# INTERNATIONAL SEARCH REPORT

International Application No PCT/JP91/00441

**I. CLASSIFICATION OF SUBJECT MATTER** (if several classification symbols apply, indicate all) ⁶

According to International Patent Classification (IPC) or to both National Classification and IPC

Int. Cl⁵ H01B1/24, H01B9/02

**II. FIELDS SEARCHED**

| Minimum Documentation Searched ⁷ | |
|---|---|
| Classification System | Classification Symbols |
| IPC | H01B1/24, H01B9/02 |

| Documentation Searched other than Minimum Documentation to the Extent that such Documents are included in the Fields Searched ⁸ |
|---|
| Jitsuyo Shinan Koho             1926 - 1991 |
| Kokai Jitsuyo Shinan Koho       1971 - 1991 |

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| A | JP, A, 54-115798 (Fujikura Ltd.), September 8, 1979 (08. 09. 79), (Family: none) | 1-9 |
| A | JP, A, 57-158907 (Fujikura Ltd.), September 30, 1982 (30. 09. 82), (Family: none) | 1-9 |
| A | JP, A, 59-168051 (Tokyo Ink K.K.), September 21, 1984 (21. 09. 84), (Family: none) | 1-9 |
| A | JP, A, 62-256847 (The Furukawa Electric Co., Ltd.), November 9, 1987 (09. 11. 87), (Family: none) | 1-9 |
| A | JP, A, 1-243305 (Sumitomo Electric Industries, Ltd.), September 28, 1989 (28. 09. 89), (Family: none) | 1-9 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 6, 1991 (06. 05. 91) | June 24, 1991 (24. 06. 91) |

| International Searching Authority | Signature of Authorized Officer |
|---|---|
| Japanese Patent Office | |

Form PCT/ISA/210 (second sheet) (January 1985)